# EUROPÄISCHE PATENTANMELDUNG

(11) **EP 1 182 166 A2**
(43) Veröffentlichungstag der Anmeldung: **27.02.2002**
(21) Anmeldenummer: 01120131.6
(22) Anmeldetag: 22.08.2001
(51) Int. Cl.: C01B 3/38, C01B 3/36

(54) **Verfahren und Vorrichtung zum Erzeugen eines wasserstoffreichen Gases**

(30) Priorität: 23.08.2000 DE 10041384
(71) Anmelder: XCELLSIS GmbH, 73230 Kirchheim / Teck-Nabern (DE)
(72) Erfinder: Boneberg, Stefan, 72660 Beuren (DE); Schäfer, Martin, 73230 Kirchheim/Teck (DE); Schüssler, Dr. Martin, 89073 Ulm (DE); Theis, Erik, 73230 Kirchheim/Teck-Nabern (DE)
(74) Vertreter: Kaufmann, Ursula Josefine, Dr.rer.nat. Dipl.-Phys.

(57) **Zusammenfassung**

Verfahren zum Betrieb einer Gaserzeugungsvorrichtung, die einen POX-Reaktor mit einem nachgeschalteten Wasserdampfreformer umfaßt, wobei zum Starten der Gaserzeugungsvorrichtung die Luftmenge in allen Betriebsphasen so eingestellt wird, daß Sauerstoffanteile im POX-Produktgas aufgrund unverbrannter Luftbestandteile minimiert werden. Zwischen POX-Reaktor und Wasserdampfreformer ist weiterhin einen adiabatische, katalytische Nachstufe geschaltet, in der Sauerstoffbestandteile des POX-Produktgases umgesetzt werden.

## Beschreibung

Die vorliegende Erfindung betrifft ein Verfahren und eine Vorrichtung zum Erzeugen eines wasserstoffreichen Gases. Die Erfindung bezieht sich insbesondere auf ein Verfahren zum Starten einer Gaserzeugungsvorrichtung.

Wasserstoff kann aus geeigneten Brennstoffen durch exotherme partielle Oxidation, nachfolgend als POX bezeichnet, entsprechend der Gleichung

-(CH2)- + 1/2O₂ (Luft) ⇒ H₂ + CO

und/oder endotherme Wasserdampfreformierung entsprechend der Gleichung

-(CH₂)- + 2H₂O ⇒ 3H₂ + CO₂

erzeugt werden. Es ist auch eine Kombination der beiden Prozesse möglich, die zu autothermer Betriebsweise führen kann. Geeignete Brennstoffe sind insbesondere Methanol sowie andere Kohlenwasserstoffderivate, wie höhere Alkohole, Benzin, Diesel, LPG (Liquid Petroleum Gas) oder NG (Natural Gas).

Aus der US 3 982 910 ist ein Wasserstoffgenerator und ein Verfahren zum Erzeugen eines rußfreien wasserstoffreichen Gases mittels partieller Oxidation bekannt. Zum Starten wird im Generator Luft mit einem Sprühnebel aus flüssigem Kohlenwasserstoffbrennstoff gemischt und gezündet. Mit der Verbrennungswärme wird zuzuführende Luft bis auf eine vorbestimmte Temperatur vorgewärmt. Bei Erreichen dieser Temperatur, die über der Siedetemperatur des flüssigen Brennstoffes liegt, wird auf Normalbetrieb umgestellt. Im Normalbetrieb wird der Brennstoff verdampft, mit der vorgewärmten Luft gemischt und anschließend das wasserstoffreiche Gas aus dem Brennstoffgemisch mittels partieller Oxidation in einer Brennkammer des Generators erzeugt. Das Luft/Brennstoffverhältnis beim Starten des Generators ist so eingestellt, daß es über dem des Normalbetriebes mit verdampftem Brennstoff liegt.

Aus der EP 0 646 093 ist ein Verfahren zum Anfahren eines Wasserdampfreformierungs-/Teiloxidationsprozesses zur Umwandlung eines Methan enthaltenden Einsatzgases in ein wasserstoffreiches Gas mit einem Wirbelbett- oder stoßenden Wirbelbettkatalysator bekannt, bei dem die Tendenz zum Zusammenklumpen des Katalysatormaterials reduziert wird. Dabei wird in einem ersten Schritt ein Wirbelbett aus inerten Teilchen, vorzugsweise Aluminium, in einer oxidierenden Atmosphäre in Gegenwart von Sauerstoff und in Abwesenheit eines Reformierungskatalysators auf Reaktionstemperatur erhitzt. Anschließend wird eine reduzierende Atmosphäre erzeugt, bevor der Reformierungskatalysator, vorzugsweise ein Nickel enthaltender Katalysator, in das Wirbelbett eingebracht wird. Das Einsatzgas wird dann am Katalysator in Gegenwart von Sauerstoff in ein wasserstoffreiches Gas umgewandelt.

Aus der EP 0 887 306 der Anmelderin ist ein Verfahren zum Starten einer Gaserzeugungsvorrichtung mit nachgeschalteter Gasreinigungsstufe bekannt, wobei mittels partieller Oxidation und/oder Wasserdampfreformierung aus einem Brennstoff ein wasserstoffreiches Gas erzeugt wird. Zur Gasreinigung wird eine selektive CO-Oxidations-Stufe, die im allgemeinen einen platinhaltigen Katalysator umfaßt, eingesetzt. Während der Startphase wird die Gasreinigungsstufe vorübergehend als katalytischer Brenner genutzt, indem dem Brennstoff Sauerstoff beigemischt und die Strömungsrichtung so umgekehrt wird, daß zuerst die Gasreinigungsstufe und dann die Gaserzeugungsvorrichtung durchströmt werden. Über die als Brenner betriebene Gasreinigungsstufe wird die Vorrichtung beim Starten schnell auf Betriebstemperatur erhitzt.

Aus der EP 0 924 163 der Anmelderin ist ein Verfahren zum Starten einer Wasserdampfreformierung mittels eines Reformierungsreaktors, eines Verdampfers, eines katalytischen Brenners und eines Membranmodules zur Wasserstoffabtrennung bekannt. Beim Kaltstart wird ein Aufheizvorgang durchgeführt, wobei in einer ersten Betriebsphase der Reformierungsreaktor und der Verdampfer durch den Brenner erhitzt werden. In einer zweiten Betriebsphase wird der Reformierungsreaktor mit einem gegenüber Normalbetrieb erhöhten Wasser/Kohlenwasserstoffverhältnis betrieben und das Reformatgas wird dem katalytischen Brenner über das Membranmodul zugeführt. In einer dritten Betriebsphase des Aufheizens wird die Zufuhr von Wasserstoff bzw. Kohlenwasserstoff zum katalytischen Brenner verringert. Mit steigender Betriebstemperatur des Membranmoduls wird der Kohlenwasserstoffanteil des Kohlenwasserstoff/Wasserdampf-Gemisches im Verdampfer bis hin zum Gemischverhältnis bei Normalbetrieb erhöht.

Aus der EP 0 924 161 der Anmelderin ist ein Verfahren zum Betreiben einer Anlage mit einem sowohl zur Wasserdampfreformierung als auch zur partieller Oxidation geeigneten Reaktor, einem Verdampfer und einem Membranmodul bekannt. Ein katalytischer Brenner ist vorgesehen, um den Reaktor, den Verdampfer und das Membranmodul auf Betriebstemperatur zu bringen. Beim Starten der Anlage wird der Reaktor in einer ersten Betriebsphase als partieller Oxidationsreaktor mit einem gegenüber Normalbetrieb geringeren Betriebsdruck betrieben und in einer zweiten Betriebsphase wird der Reaktor auf einen Reformierungsbetrieb umgestellt und der Druck vom Aufheizbetriebsdruck auf Normalbetriebsdruck erhöht.

Weiterhin ist aus der WO 99/31012 der Anmelderin ein Verfahren zum Betreiben einer Anlage zur Wasserdampfreformierung eines Kohlenwasserstoffes bekannt, bei dem ein Teil eines Reformierungsreaktors als Mehrfunktions-Reaktoreinheit ausgestaltet ist. Beim Kaltstart wird die Mehrfunktions-Reaktoreinheit in einer ersten Betriebsphase mit gleichzeitig zugeführten Brennstoff und sauerstoffhaltigem Gas als katalytischer Brenner und in einer zweiten Betriebsphase als partieller Oxidationsreaktor (POX-Reaktor) betrieben. Beim Übergang von erster zu zweiter Betriebsphase ist außerdem vorgesehen, dem Brennstoff/Sauerstoff-Gemisch Wasser hinzuzudosieren und/oder den Brennstoffmengenstrom mit steigender Temperatur der Mehrfunktions-Reaktoreinheit zu erhöhen und/oder den Mengenstrom des sauerstoffhaltigen Gases schon im Verlauf der ersten Betriebsphase unterstöchiometrisch einzustellen. Durch das unterstöchiometrische Einstellen soll die Erzeugung von Spaltprodukten, wie Wasserstoff, durch thermische Zersetzung des Brennstoffes begünstigt werden. Um geeignete Bedingungen für die partielle Oxidation des Brennstoffes einzustellen, wird in der zweiten Betriebsphase das Verhältnis von sauerstoffhaltigem Gas und Brennstoff gegenüber der ersten Betriebsphase verringert. Der übrige Reaktorteil, d.h. der nicht als Mehrfunktions-Reaktoreinheit vorgesehene Bereich, wird während der zweiten Betriebsphase als Nachreformierungseinheit und CO-Shiftkonverterstufe eingesetzt. Im Normalbetrieb wird die Mehrfunktions-Reaktoreinheit zumindest zeitweise als Reformierungseinheit zur Wasserstofferzeugung verwendet.

Demgegenüber liegt der Erfindung die Aufgabe zugrunde, ein wasserstoffreiches Gas mittels eines Reaktors zur partiellen Oxidation und eines Wasserdampfreformers zu erzeugen, wobei einer Alterung des Katalysators des Wasserdampfreformers entgegengewirkt werden soll.

Zur Lösung dieser Aufgabe wird zum einen ein Verfahren mit den Merkmalen des Anspruches 1 und zum anderen eine Vorrichtung mit den Merkmalen des Anspruches 5 vorgeschlagen.

Durch das erfindungsgemäße Verfahren wird gewährleistet, daß der Sauerstoffanteil im Produktgas des POX-Reaktors in jeder Betriebsphase minimiert wird. Unverbrannte Sauerstoffanteile würden den Katalysator des Wasserdampfreformers oxidieren und so zu einer verstärkten Alterung des Katalysators führen.

Bei einer vorteilhaften Weiterbildung des Verfahren wird der Wasserdampfreformer durch Heizmittel erhitzt. Die Verbrennungswärme des Brennstoffes kann somit im wesentlichen zum Erhitzen des POX-Reaktors verwendet werden. Dadurch wird der POX-Reaktor schnell auf die Betriebstemperatur für die partielle Oxidation gebracht, so daß schon nach kurzer Zeit wasserstoffreiches Gas über die partielle Oxidation zur Verfügung steht.

Bei einer weiteren vorteilhaften Ausgestaltung der Erfindung ist vorgesehen, daß in dem POX-Reaktor erzeugtes Produktgas durch eine adiabatische, katalytische Nachstufe geleitet wird, um unverbrannte Anteile des Brennstoff/Sauerstoff- bzw. des Brennstoff/Sauerstoff/Wasser-Gemisches im Produktgas in der Nachstufe umzusetzen, so daß der Sauerstoffanteil im Produktgas vor Zuführen zum Wasserdampfreformer minimiert wird. Beim Verbrennen von Brennstoff im POX-Reaktor und insbesondere bei tiefen Temperaturen können im Produktstrom des POX-Reaktors noch unverbrannte Anteile des Brennstoff/Sauerstoffgemisches auftreten. Durch Umsetzen dieser Restanteile in der Nachstufe wird verhindert, daß diese eine Alterung des Katalysators des Reformers bewirken können.

Eine erfindungsgemäße Gaserzeugungsvorrichtung umfaßt mindestens einen POX-Reaktor mit nachgeschaltetem Wasserdampfreformer, wobei zwischen dem POX-Reaktor und dem Wasserdampfreformer eine adiabate, katalytische Nachstufe angeordnet ist. Über den POX-Reaktor kann beim Starten schon nach kurzer Zeit wasserstoffreiches Gas erzeugt werden. Bei entsprechender Auslegung des POX-Reaktors können auch die Edukte für die Wasserdampfreformierung in POX-Reaktor erhitzt bzw. verdampft werden. In der katalytischen Nachstufe werden unverbrannte Sauerstoffanteile des POX-Produktstroms umgesetzt, so daß ein minimierter Sauerstoffanteil insbesondere auch zu Beginn der Startphase und bei niedrigen Temperaturen sichergestellt ist und einer Alterung des Katalysators des Reformers entgegengewirkt wird.

Bei einer vorteilhaften Fortbildung umfaßt die adiabatische, katalytische Nachstufe einen edelmetallhaltigen Katalysator. Edelmetalle wie Platin sind schon bei geringen Temperaturen katalytisch aktiv und eignen sich daher besonders.

Bei einer weiteren vorteilhaften Fortbildung umfaßt die adiabatische, katalytische Nachstufe einen Katalysatorträger mit geringer Wärmekapazität. Die Nachstufe kann dadurch schnell und unter geringem Wärmeenergiebedarf auf Betriebstemperatur aufgeheizt werden.

Bei einer vorteilhaften Weiterbildung sind Heizmittel zum Heizen des Wasserdampfreformers und/oder der adiabaten, katalytische Nachstufe vorgesehen. Dadurch ist ein Aufheizen unabhängig von der Verbrennungswärme des POX-Reaktors möglich. Insbesondere die Nachstufe kann schon zu Beginn der Startphase auf Betriebstemperatur gebracht werden, so daß eine Minimierung des Sauerstoffanteils im Produktgas des POX-Reaktors bereits bei Beginn der Verbrennung gewährleistet ist.

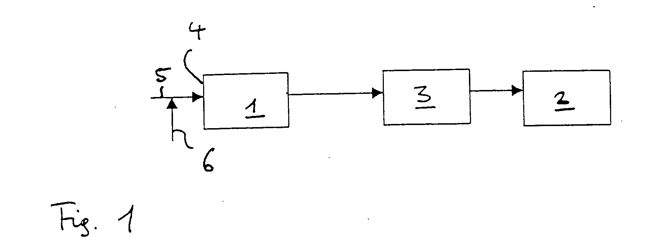

Die Erfindung wird nun anhand eines Ausführungsbeispieles in der Zeichnung dargestellt und im folgenden unter Bezugnahme auf die Zeichnung näher erläutert.

Die einzige Figur zeigt ein schematisches Blockschaltbild einer erfindungsgemäßen Gaserzeugungsvorrichtung.

Die in der Figur dargestellte erfindungsgemäße Gaserzeugungsvorrichtung umfaßt einen Reaktor 1 für die partielle Oxidation (POX-Reaktor), einen Wasserdampfreformer 2, eine adiabatische, katalytische Nachstufe 3, die zwischen POX-Reaktor 1 und Wasserdampfreformer 2 geschaltet ist und (nicht dargestellte) Heizmittel zum Aufheizen des Wasserdampfreformers 2 und/oder der Nachstufe 3. Als POX-Reaktor und Wasserdampfreformer sind insbesondere übliche, dem Fachmann bekannte Reaktoren bzw. Reformer einsetzbar. Als Katalysatoren können beispielsweise kupferhaltige und/oder platinhaltige Katalysatoren verwendet werden. Die adiabatische, katalytische Nachstufe 3 umfaßt einen Katalysatorträger mit geringer Wärmekapazität und einen edelmetallhaltigen Katalysator, beispielsweise auf der Grundlage von Platin. Die Nachstufe 3 kann vorzugsweise in dem (nicht im einzelnen dargestellten) Sammlerkanal des POX-Reaktors 1 oder im Verteilerkanal des Reformers 2 integriert sein.

Edukte für die Erzeugung des wasserstoffreichen Gases sind Brennstoff, sauerstoffhaltiges Gas und/oder Wasser. Bevorzugter Brennstoff ist Methanol. Es können aber auch andere Kohlenwasserstoffderivate, wie höhere Alkohole, Benzin, Diesel, LPG (Liquid Petroleum Gas) oder NG (Natural Gas) verwendet werden. Als sauerstoffhaltiges Gas kommt vorzugsweise Luft zum Einsatz. Sämtliche Edukte können der Gaserzeugungsvorrichtung über eine Eingangsseite 4 des POX-Reaktors 1 zugeführt werden. Dabei ist eine Zuführung 5 für die flüssigen Edukte wie Brennstoff und Wasser sowie eine Zuführung 6 zum Zudosieren von Luft vorgesehen.

Zum Starten der Gaserzeugungsvorrichtung wird zuerst Brennstoff in den POX-Reaktor 1 dosiert und danach Luft für die Verbrennung des Brennstoffes hinzugemischt. Durch diese Reihenfolge wird sichergestellt, daß beim Starten der Vorrichtung keine unverbrannte Luft aus dem POX-Reaktor 1 in den Reformer 2 gelangt. Die Luftmenge wird so eingestellt, daß diese höchstens dem stöchiometrischen Verhältnis einer vollständigen Verbrennung mit der jeweiligen zugeführten Brennstoffmenge entspricht. Dadurch wird ein vollständiger Umsatz der Luft in dem POX-Reaktor 1 gefördert, d.h. Sauerstoffanteile im POX-Produktgas werden minimiert. Durch die entstehende Verbrennungswärme wird der POX-Reaktor 1 auf Betriebstemperatur gebracht. Die Verbrennungswärme kann auch genutzt werden, um weitere Anlagenteile wie die katalytische Nachstufe 3 oder den Reformer 2 zumindest unterstützend auf Betriebstemperatur zu erhitzen. Für einen schnellen Start der Gaserzeugungsvorrichtung sind jedoch separate Heizmittel wie Brenner oder elektrische Heizungen zu bevorzugen.

In der nächsten Betriebsphase wird bei Erreichen der Betriebstemperatur der partiellen Oxidation im POX-Reaktor 1 die zugeführte Luftmenge reduziert, da die partielle Oxidation des Brennstoffes deutlich weniger Sauerstoff benötigt als die Verbrennung. Gleichzeitig wird Wasser hinzudosiert, um einer Überhitzung bei der katalytischen Verbrennung vorzubeugen und einen Übergang zur Wasserdampfreformierung des Brennstoffes vorzubereiten. Dabei wird die Luft- und/oder Wassermenge so geregelt, daß ein vollständiger Umsatz des Brennstoff/Sauerstoff/Wasser-Gemisches zu Wasserstoff stattfindet. Auch in dieser Betriebsphase werden dadurch Sauerstoffanteile im POX-Gas aufgrund unverbrannter Luftbestandteile minimiert.

Bei Erreichen der Betriebstemperatur der Wasserdampfreformierung im Wasserdampfreformer 2 wird die zugeführte Luftmenge weiter reduziert oder die Luftzufuhr unterbrochen. Im POX-Reaktor 1 wird dadurch nur noch ein Teil des zugeführten Brennstoffes umgesetzt. Der Hauptanteil des Brennstoffes wird im nachgeschalteten Wasserdampfreformer 2, der einen besseren Systemwirkungsgrad als der POX-Reaktor 1 aufweist, unter entsprechender Wasserdosierung zu Wasserstoff umgesetzt. Ein Aufrechterhalten des POX-Betriebes ist von Vorteil, weil über die Dosierung flüssigen Brennstoffes im POX-Reaktor 1 schneller auf Lastwechsel reagiert werden kann als über eine Mengenänderung des Brennstoff/Wasserdampf-Gemisches des Reformers 2. Durch den Einsatz der adiabatischen, katalytischen Nachstufe 3 wird erreicht, daß im Produktgas des POX-Reaktors noch vorhandene Sauerstoffanteile, wie sie insbesondere bei niedrigen Temperaturen aufgrund unverbrannter Luftbestandteile auftreten können, katalytisch umgesetzt werden und so einer Alterung des Reformerkatalysators 2 entgegengewirkt wird.

## Patentansprüche

1. Verfahren zum Betrieb einer Gaserzeugungsvorrichtung zum Erzeugen eines wasserstoffreichen Gases aus einem Sauerstoff/Brennstoff-Gemisch durch partielle Oxidation und/oder aus einem Wasser/Brennstoff-Gemisch durch katalytische Wasserdampfreformierung, wobei die Gaserzeugungsvorrichtung einen Reaktor (1) zur partiellen Oxidation (POX-Reaktor) mit einem nachgeschalteten Wasserdampfreformer (2) umfaßt und zum Starten der Gaserzeugungsvorrichtung folgende Schritte ausgeführt werden:
- Dosieren von Brennstoff in den POX-Reaktor (1)
- Starten einer Verbrennung von Brennstoff im POX-Reaktor (1) durch Hinzudosieren von sauerstoffhaltigem Gas, wobei die Gasmenge so gewählt wird, daß diese höchstens dem stöchiometrischen Verhältnis eines vollständigen Brennstoffumsatzes entspricht,
- Erhitzen wenigstens des POX-Reaktors (1) der Gaserzeugungsvorrichtung mittels der gewonnenen Verbrennungswärme,
- Reduzieren des Mengenstromes des sauerstoffhaltigem Gases und Hinzudosieren von Wasser bei Erreichen der Betriebstemperatur der partiellen Oxidation im POX-Reaktor (1), wobei der Mengenstrom des sauerstoffhaltigen Gases und/oder des Wassers so eingestellt wird, daß ein möglichst vollständiger Umsatz des Brennstoff/Sauerstoff/Wasser-Gemisches zu Wasserstoff erfolgt und
- weiteres Reduzieren des Mengenstromes des sauerstoffhaltigen Gases bei Erreichen der Betriebstemperatur der Wasserdampfreformierung im Wasserdampfreformer (2), so daß im POX-Reaktor (1) nur ein Teilumsatz des Brennstoffes erfolgt und der verbleibende Brennstoffanteil im nachgeschalteten Wasserdampfreformer (2) umgesetzt wird.

2. Verfahren nach Anspruch 1, **dadurch gekennzeichnet, daß** bei Erreichen der Betriebstemperatur der Wasserdampfreformierung im Wasserdampfreformer (2) die Zufuhr des sauerstoffhaltigen Gases unterbrochen wird.

3. Verfahren nach Anspruch 1 oder 2, **dadurch gekennzeichnet, daß** der Wasserdampfreformer (2) durch Heizmittel erhitzt wird.

4. Verfahren nach einem der Ansprüche 1 bis 3, **dadurch gekennzeichnet, daß** in dem POX-Reaktor (1) erzeugtes Produktgas durch eine adiabate, katalytische Nachstufe (3) geleitet wird, um unverbrannte Anteile des Brennstoff/Sauerstoff- bzw. des Brennstoff/Sauerstoff/Wasser-Gemisches des Produktgases umzusetzen, so daß der Sauerstoffanteil im Produktgas vor Zuführen zum Wasserdampfreformer (2) minimiert wird.

5. Vorrichtung zum Ausführen des Verfahrens nach einem der Ansprüche 1 bis 4, mindestens umfassend einen POX-Reaktor (1) mit nachgeschaltetem Wasserdampfreformer (2), wobei zwischen dem POX-Reaktor (1) und dem Wasserdampfreformer (2) eine adiabatische, katalytische Nachstufe (3) angeordnet ist.

6. Vorrichtung nach Anspruch 5, **dadurch gekennzeichnet, daß** die adiabatische, katalytische Nachstufe (3) einen edelmetallhaltigen Katalysator umfaßt.

7. Vorrichtung nach Anspruch 5 oder 6, **dadurch gekennzeichnet, daß** die adiabatische, katalytische Nachstufe (3) einen Katalysatorträger mit geringer Wärmekapazität umfaßt.

8. Vorrichtung nach einem der Ansprüche 5 bis 7, **dadurch gekennzeichnet, daß** Heizmittel zum Heizen des Wasserdampfreformers (2) und/oder der adiabatischen, katalytischen Nachstufe (3) vorgesehen sind.

9. Vorrichtung nach einem der Ansprüche 5 bis 8, **dadurch gekennzeichnet, daß** die adiabatische, katalytische Nachstufe (3) im POX-Reaktor (1) oder Wasserdampfreformer (2) integriert ist.
